# EUROPEAN PATENT APPLICATION

(11) **EP 1 637 781 A1**
(43) Date of publication of application: **22.03.2006**
(21) Application number: 04745743.7
(22) Date of filing: 10.06.2004
(51) Int. Cl.: F16J 15/10

(54) **GASKET ASSEMBLING METHOD AND GASKET**

(30) Priority: 12.06.2003 JP 2003168303
(71) Applicant: NOK CORPORATION, Tokyo 105-8585 (JP); DENSO CORPORATION, Kariya-shi, Aichi-ken, 448-8661 (JP)
(72) Inventor: NAKAO, Takashi, c/o NOK CORPORATION, Haibara-Gun, Shizuoka 4210532 (JP); YOSHITSUNE, Shuji, c/o NOK CORPORATION, Haibara-Gun, Shizuoka 4210532 (JP); YAMAMOTO, Yoshiaki, c/o DENSO CORPORATION, Kariya-shi, Aichi 4488661 (JP); INO, Masao, c/o DENSO CORPORATION, Kariya-shi, Aichi 4488661 (JP)
(74) Representative: TBK-Patent
(86) International application number: PCT/JP2004/008113
(87) International publication number: WO 2004/111505

(57) **Abstract**

In a gasket for sealing a gap between a throttle body and an intake manifold that are assembled obliquely to each other, sealing performance is stabilized by preventing the gasket from falling or being caught. A gasket (1) with a substantially pentagonal cross-section is set in an installation groove (21) before a throttle body (20) and an intake manifold (30) are assembled. The gasket (1) is then brought to be in contact only with a close-contact surface (31) of the intake manifold, to which surface, with a throttle body (20) assembled to an intake manifold (30), the gasket (1) in the installation groove is in close contact. After that the throttle body (20) is assembled to the intake manifold (30) by making the gasket (1) to be in sliding contact with the close-contact surface (31).

## Description

### Technical Field

The present invention relates to a gasket assembling method, and a gasket.

### Background Art

In the prior art, the gasket has been used with a view to preventing leakage of a fluid (e.g., air) from the outside. In case the clearance between two members is to be sealed with the gasket, this seal is made by forming a fitting groove in one member and by fitting the gasket in the fitting groove thereby to hold the gasket in close contact with the groove bottom of the fitting groove and the surface of the other member.

The gasket is made of a rubbery elastomer having a section of a convex, diamond or elliptical shape or a shape of a combination of irregularities.

The other member, with which the gasket makes contact, may be made of a resin. This member molded of the resin may have a waving or creep, may be short of strength or may fail to have an accurate flatness. In this case, the compression direction to compress the gasket disperses in size, or the compression force to compress the gasket may also disperse. In order to absorb this dispersion to exhibit the sealing function, it is necessary to provide a gasket longer than the depth of the groove for the large squeeze. In case the fitting groove is thinned to reduce the size of and spare the space for the member or apparatus having the gasket, the gasket has a shape of slender section.

In the case of a gasket having the section of slender section, however, the gasket is troubled by a fall when compressed. In Patent Document 1, for example, the fall is prevented by forming fall-preventing projections at a predetermined interval on the gasket side face.
Patent Document 1: Japanese Patent No. 3,310,547

### Disclosure of the Invention

### Problems that the Invention Is to Solve

At the time of assembling the throttle body and the intake manifold, a throttle body having a section of a generally trapezoidal shape may be fitted in the intake manifold.

In this case, the gasket is fitted in the fitting groove formed in the throttle body, and the throttle body having the gasket fitted therein is fitted in the intake manifold.

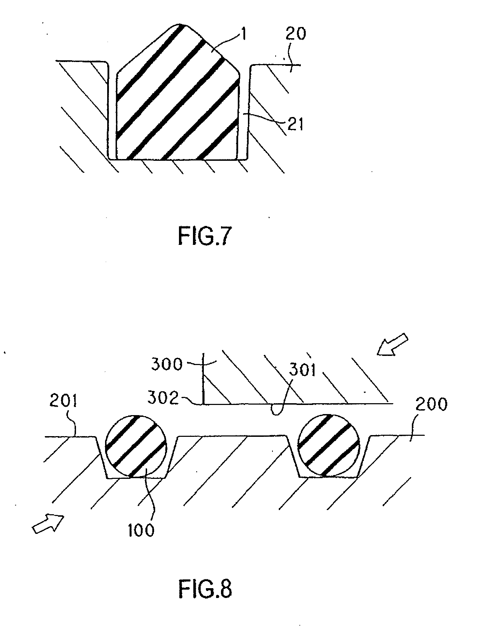

Fig. 8 is a diagram for explaining the assembly of a throttle body 200 having a gasket 100 fitted therein, and an intake manifold 300.

In case the throttle body 200 having the generally trapezoidal section is fitted in the intake manifold 300, as shown in Fig. 8, their confronting faces 201 and 301, after fitted, move obliquely relative to each other from the position before fitted, so that the throttle body 200 and the intake manifold 300 are assembled.

Usually, the assembly of the gasket is so performed after the gasket was fitted in the fitting groove, that the cover closes downward generally vertically. In case the gasket is obliquely closed with the cover, a fall may also occur to cause a bite (in an area X, as shown in Fig. 9) even in a gasket 110 such as the Patent Document 1, as shown in Fig. 9.

In case, moreover, the intake manifold 300 is assembled obliquely relative to the gasket 100 fitted in the throttle body 200, the squeeze of the gasket 100 and the corner portion 302 at the leading end of the intake manifold 300 may interfere to cause problems of a fall or torsion of the gasket or a bite into the groove.

In case the fall or torsion occurs in the gasket, the surface pressure is made short by the short squeeze thereby to invite a reduction in the sealing performance.

The present invention has been conceived to solve the aforementioned problems of the prior art thus far described and has an object to provide a gasket assembling method and a gasket, in which the sealing performance is stabilized by preventing the fall or bite of the gasket for sealing the clearance between the throttle body and the intake manifold to be assembled obliquely relative to each other.

### Means for Solving the Problems

In order to achieve the aforementioned object, the present invention adopts the following means.

According to the invention, the gasket is fitted in the fitting groove formed in the face of one of two members having faces confronting each other, and the two members are then assembled such that a corner portion of the other member does not contact with the gasket, whereby the gasket is assembled.

Specifically, the two members are assembled by first bringing the gasket in a fitting groove formed in one member into contact with only the close contact face (or the confronting face) of the other member, with which the gasket in the fitting groove makes close contact in the assembled state, and by bringing the gasket into sliding contact with the close contact face.

The gasket to be fitted in the fitting groove of one member has a section of a generally pentagonal shape. This shape means the pentagonal section, which is composed of three points (i.e., the leading end and the end portions of the individual inclined faces) protruding to the side of the other member and forming a section of an angle shape having a round shape at the leading end, and two points determined by the bottom face (i.e., the end portions of the bottom face) to contact in planar with the groove bottom of the fitting groove.

Moreover, the assembly of the two members is performed such that the leading ends of the two inclined faces of the gasket make contact only with the close contact face of the other member. At this time, of the two inclined faces of the gasket, the corner portion of the generally pentagonal section, which is located at the end portion of the two inclined faces on the downstream side in the direction of the relative movement of the other member to one member, and the side face between said corner portion and the bottom face make close contact with the groove side wall of the fitting groove confronting the corner portion.

As a result, the corner portion of the other member does not contact with the gasket so that the gasket can be prevented from the fall or torsion by the interference with the corner portion.

. Since the leading end of the two inclined faces of the gasket is formed into the round shape, moreover, in the course of the two members being assembled, the surface pressure for the gasket to receive from the close contact face of the other member can be made substantially homogeneous without being influenced by the contact angle relative to the close contact face.

At the time of assembling the two members, the gasket is subject to the force in the direction for the other member to move relative to one member. Of the two inclined faces of the gasket, the corner portion on the downstream side in the direction for the relative movement of the other member, and the side face between the corner portion and the bottom face make close contact with the groove side wall of the fitting groove 21 (especially, make planar contact with the groove side wall on the side face), and the bottom face of the gasket make planar contact with the groove bottom of the fitting groove so that the gasket can be prevented from turning.

According to the present invention, specifically, there is provided a method for assembling a gasket,
which is fitted in a fitting groove formed in the face of one of two members having faces confronting each other and is compressed, when the two members are assembled as their faces approach each other obliquely with respect to their confronting direction, thereby to seal the clearance between the two members, and
which is formed into a generally pentagonal shape having two inclined faces forming a section of an angle shape protruding to the other of the two members and forming a leading end of a round section, and a bottom face for making planar contact with the groove bottom of the fitting groove, characterized by comprising:
the first step of fitting the gasket body in said fitting groove of said one member;
the second step of, prior to beginning the assembling of said two members, bringing said leading end of said two inclined faces of the gasket body fitted in said fitting groove into contact with only the close contact face of said other member that makes close contact after the assembly with said leading end; and
the third step of assembling said two members having the gasket body fitted therein, while said leading end being in sliding contact with said close contact face.

Moreover, there is provided a gasket fitted in a fitting groove formed in the face of one of two members having confronting faces confronting each other and is compressed, when said two members are assembled as their confronting faces approach each other obliquely with respect to their confronting direction, thereby to seal the clearance between said two members, characterized:
in that said gasket is formed into a generally pentagonal shape having two inclined faces forming a section of an angle shape protruding to the other of said two members and forming a leading end of a round section, and a bottom face for making planar contact with the groove bottom of said fitting groove; and
in that, in case said two members are assembled, the corner portion of the generally pentagonal section, which is one of the end portions of said two inclined faces located on the downstream side in the direction of the relative movement of said other member, and the side face between said corner portion and said bottom face make close contact with the confronting groove side wall of the fitting groove.

Moreover, the present invention can be suitably applied especially to the case of the internal combustion engine such as an automobile, in which the gasket is assembled by fitting the gasket in the fitting groove formed in the throttle body (i.e., one member) and subsequently by assembling (or fitting) the throttle body in the intake manifold (i.e., the other member) such that the corner portion of the intake manifold does not contact with the gasket.

According to the present invention, more specifically, there is provided a method for assembling a gasket,
which is fitted in a fitting groove formed in the face of a throttle body of the throttle body and an intake manifold having faces confronting each other and, is compressed when the throttle body and the intake manifold are assembled as their faces approach each other obliquely with respect to their confronting direction, thereby to seal the clearance between the throttle body and the intake manifold, and
which is formed into a generally pentagonal shape having two inclined faces forming a section of an angle shape protruding to the side of the intake manifold and forming a leading end of a round section, and a bottom face for making planar contact with the groove bottom of said fitting groove, characterized by comprising:
the first step of fitting the gasket body in said fitting groove of said throttle body;
the second step of, prior to beginning the assembling of the throttle body and the intake manifold, bringing said leading end of said two inclined faces of the gasket body fitted in said fitting groove into contact with only the close contact face of the intake manifold that makes close contact after the assembly with said leading end; and
the third step of assembling the throttle body and the intake manifold having the gasket body fitted therein, while said leading end being in sliding contact with said close contact face.

Moreover, there is provided a gasket fitted in a fitting groove formed in the confronting face of a throttle body of the throttle body and an intake manifold having confronting faces confronting each other and, compressed when the throttle body and the intake manifold are assembled as their confronting faces approach each other obliquely with respect to their confronting direction, thereby to seal the clearance between the throttle body and the intake manifold, characterized:
in that said gasket is formed into a generally pentagonal shape having two inclined faces forming a section of an angle shape protruding to the side of the intake manifold and forming a leading end of a round section, and a bottom face for making planar contact with the groove bottom of said fitting groove; and
in that, in case the throttle body and the intake manifold are assembled, the corner portion of the generally pentagonal section, which is one of the end portions of said two inclined faces located on the downstream side in the direction of the relative movement of the intake manifold, and the side face between said corner portion and said bottom face make close contact with the confronting groove side wall of the fitting groove.

In the construction described above, it is also preferred that, in case the throttle body and the intake manifold are assembled, the gasket body is fitted in said fitting groove, and the assembly of the throttle body and the intake manifold begins with the contact between said leading end of said two inclined faces of the gasket body fitted in said fitting groove and said confronting face of the intake manifold, and then the throttle body and the intake manifold approach each other, while said leading end of said two inclined faces of the gasket body fitted in said fitting groove making sliding contact with only said confronting face of the intake manifold.

As a result, the fall or bite of the gasket can be prevented to stabilize the sealing performance.

In the construction thus far described, it is also preferred that the shape, as taken from the side of the intake manifold, of the gasket body fitted in said fitting groove is an elliptical shape having a longer axial direction in the assembly direction, in which the throttle body and the intake manifold are assembled.

As a result, the gasket can be reduced in its portion generally perpendicular to the assembling direction of the throttle body and the intake manifold. Due to this portion, the gasket may fall when the throttle body and the intake manifold are assembled. In other words, the fall of the gasket can be prevented by reducing that portion.

Here, the assembly of the gasket means that the gasket is assembled between the throttle body and the intake manifold, and that the throttle body and the intake manifold are assembled in the state where the gasket is fitted in the fitting groove of the throttle body.

### Advantage of the Invention

According to the present invention, the fall or bite of the gasket can be prevented to stabilize the sealing performance.

### Brief Description of the Drawings

[Fig. 1A and 1B] Diagrams for explaining the assembly of a throttle body having a fitting groove formed therein for fitting a gasket according to an embodiment of the present invention, and an intake manifold.
[Fig. 2] A diagram for explaining the fitting grooves formed in the throttle body.
[Fig. 3] A schematic section showing the gasket according to the embodiment of the present invention.
[Fig. 4] A schematic section showing the state, in which the gasket according to the embodiment of the present invention is fitted in the fitting groove and in which a throttle body and an intake manifold are assembled.
[Fig. 5] A schematic diagram, in which the gasket fitted in the fitting groove formed in the throttle body is seen from the intake manifold side.
[Fig. 6A and 6B] Diagrams for explaining another example of the assembly of a throttle body having a fitting groove formed therein for fitting a gasket, and an intake manifold.
[Fig. 7] A schematic diagram showing a mode, in which the sectional shape of the fitting groove and the sectional shape of the portion of the gasket that is disposed within the fitting groove are different.
[Fig. 8] A diagram for explaining the prior art.

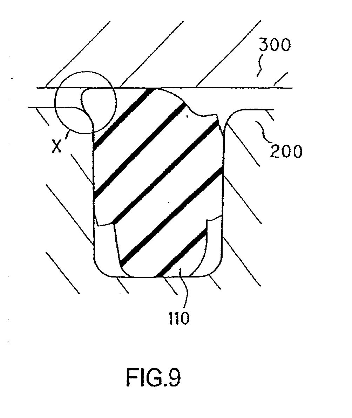

[Fig. 9] A diagram for explaining the prior art.

### Best Mode for Carrying out the Invention

A preferred embodiment of this invention will be described in detail with reference to the accompanying drawings. However, the sizes, materials, shapes and relative arrangements of the components described in this embodiment are not intended to limit the scope of this invention to them otherwise specified particularly.

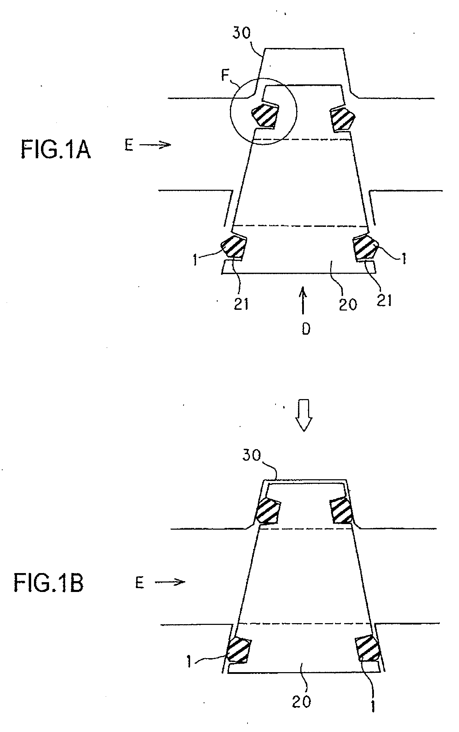

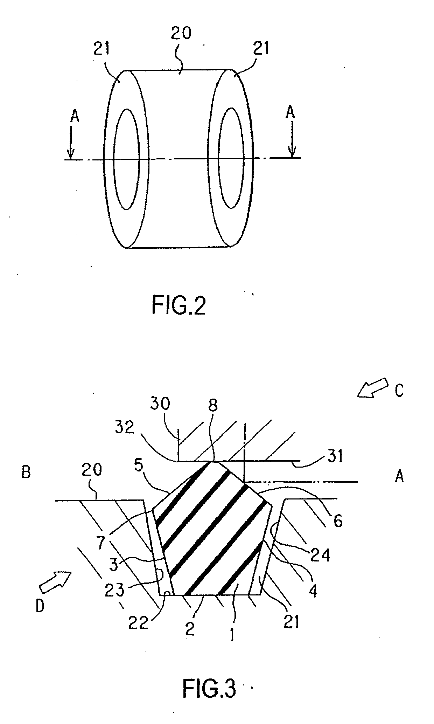

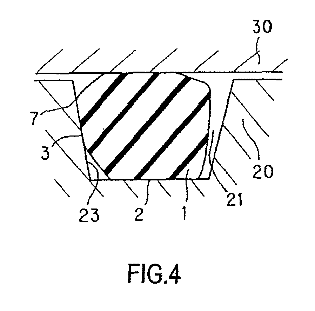

In Fig. 1 presenting diagrams for explaining the assembly of a throttle body 20 having a fitting groove 21 formed therein for fitting a gasket 1 according to this embodiment, and an intake manifold 30, Fig. 1A is a diagram showing the state before the assembly, and Fig. 1B is a diagram showing the state after the assembly. Fig. 2 is a diagram showing the fitting groove 21 formed in the throttle body 20. A section A - A shown in Fig. 2 corresponds to the throttle body 20 shown in Fig. 1. Fig. 3 is a schematic section showing the gasket 1 according to the embodiment of the present invention, and shows the state, in which the gasket 1 is fitted in the fitting groove 21 formed in the throttle body 20, and the state before the throttle body 20 and the intake manifold 30 are assembled. Fig. 3 is a diagram corresponding to an F portion shown in Fig. 1A. Fig. 4 is a schematic section showing the state, in which the gasket 1 is fitted in the fitting groove 21, and the state, in which the throttle body 20 and the intake manifold 30 are assembled.

The gasket 1 according to the present embodiment is fitted in the fitting groove 21 which is formed in the throttle body 20 having a section of a generally trapezoidal shape, and seal faces are formed on this fitting groove 21 and on the close contact face (or opposed face) 31, as confronts the fitting groove 21, of the intake manifold 30 thereby to seal the clearance between the throttle body 20 and the intake manifold 30.

The assembly of the throttle body 20 and the intake manifold 30 is performed such that the face of the throttle body 20 on which the fitting groove 21 is formed and the close contact face 31 of the intake manifold 30 move obliquely relative to each other, that is, the confronting faces of the throttle body 20 and the intake manifold 30 approach in oblique directions with respect to the confronting direction.

In the state before the assembly, as shown in Fig. 3, it is assumed that the intake manifold 30 is positioned on a side A with respect to the throttle body 20 whereas the throttle body 20 is positioned on a side B with respect to the intake manifold 30. This embodiment is described on the case, in which the throttle body 20 is to be fitted in the intake manifold 30 mounted in the internal combustion engine. With this assumption, the throttle body 20 moves relative to the intake manifold 30 in the direction of arrow D from the side B to the side A. Here in case the throttle body 20 and the intake manifold 30 are to be assembled as the single members, for example, the throttle body 20 and the intake manifold 30 move obliquely relative to each other. As seen from the side of the throttle body 20, therefore, the intake manifold 30 moves in the direction of arrow C from the A side to the B side.

Moreover, the fitting groove 21 formed in the throttle body 20 is composed of a groove bottom 22, a groove side wall 23 on the B side and a groove side wall 24 on the A side.

The gasket 1 according to the present embodiment is made of a rubbery elastomer into a generally pentagonal section.

Specifically, the gasket 1 is equipped with a bottom face 2 to abut against the groove bottom 22, a side wall 3 to confront the groove side wall 23, a side wall 4 to confront the groove side wall 24, and inclined faces 5 and 6 having a generally angle-shaped section for confronting the intake manifold 30 and for forming a leading end 8 having a generally pentagonal section. Moreover, the gasket 1 is formed at its leading end 8 into a chamfered round shape (or curved shape) between the inclined faces 5 and 6.

In case, moreover, a force in the direction of arrow C is applied to the gasket 1 fitted in the fitting groove 21, that is, in case the throttle body 20 and the intake manifold 30 are assembled, a corner portion 7 between the side wall 3 and the inclined face 5 comes into close contact with the groove side wall 23 on the downstream side of the arrow C direction, in which the intake manifold 30 relatively moves, and the side wall 3 comes into planar contact with the groove side wall 32.

The method for assembling the gasket 1 is described in the following.

] At first, the gasket 1 is so fitted in the fitting groove 21 of the throttle body 20 that its bottom face 2 comes into contact with the groove bottom 22 of the throttle body 20.

Then, the throttle body 20 is moved in the arrow D direction from the B side relative to the intake manifold 30 (as referred to Figs. 1 and 3).

At this time, the throttle body 20 is so moved and fitted in the intake manifold 30 that the corner portion 32 of the intake manifold 30 may not contact with the gasket 1 (i.e., may not take the state, as indicated by double-dotted lines in Fig. 3). Specifically, the throttle body 20 is so moved to bring the leading end 8 into contact with the close contact face 31 that the close contact face 31 of the intake manifold 30 may contact with the gasket 1 fitted in the throttle body 20, especially with the leading end 8 . After the leading end 8 made contact with the close contact face 31, the throttle body 20 is moved while sliding the leading end 8 on the close contact face 31 so as to keep the contacting state, thereby to insert the throttle body 20 into the intake manifold 30. As a result, an air passage of the intake manifold 30 through the throttle body 20 is formed, as indicated by arrow E in Fig. 1A.

By thus assembling the gasket 1, the corner portion 32 of the intake manifold 30 does not contact with the gasket 1 so that the gasket 1 can be prevented from fall or torsion by the interference with the corner portion 32.

Since the leading end 8 is chamfered into the round shape, moreover, in the course of the throttle body 20 being fitted in the intake manifold 30, the surface pressure for the gasket 1 to receive from the close contact face 31 of the intake manifold 30 can be made substantially homogeneous without being influenced by the contact angle between the gasket 1 and the close contact face 31.

Moreover, the gasket 1 fitted in the fitting groove 21 is subject to the force, by which it is compressed in the direction of arrow C, when the throttle body 20 is fitted in the intake manifold 30.

As a result, the gasket 1 is subject to a force, by which the side wall 3 is felled on the groove side wall 23 of the fitting groove 21. As shown in Fig. 4, however, the side wall 3 comes into planar contact with the groove side wall 23, and the side wall 3 and the corner portion 7 of the inclined face 5 come into close contact with the groove side wall 23 so that the gasket 1 can be prevented from falling or turning. Moreover, the bottom face 2 makes planar contact with the groove bottom 22, and the gasket 1 is subject to the force, by which it is compressed in the direction of arrow C. As a result, the bottom face 2 comes close contact with the groove bottom 22 so that the gasket 1 can be prevented from turning.

Moreover, the leading end 8 is formed by the inclined faces 5 and 6 forming the shape of an angle shape so that the torsion is hard to occur even in case the leading end 8 comes into sliding close contact with the close contact face 31.

In the course of the throttle body 20 being fitted in the intake manifold 30 with the leading end 8 being in sliding contact with the close contact face 31, moreover, the side wall 3 and the corner portion 7 make close contact with the groove side wall 23, and the bottom face 2 makes close contact with the groove bottom 22 without any serious torsion in the gasket 1 (especially, its portion having the inclined faces 5 and 6), whereby the gasket 1 can be prevented from falling or turning. Therefore, the gasket 1 (especially, its portion having the inclined faces 5 and 6) can be prevented from biting into the clearance between the throttle body 20 and the intake manifold 30.

Here is explained the state, in which the gasket 1 is fitted in the fitting groove 21 of the throttle body 20.

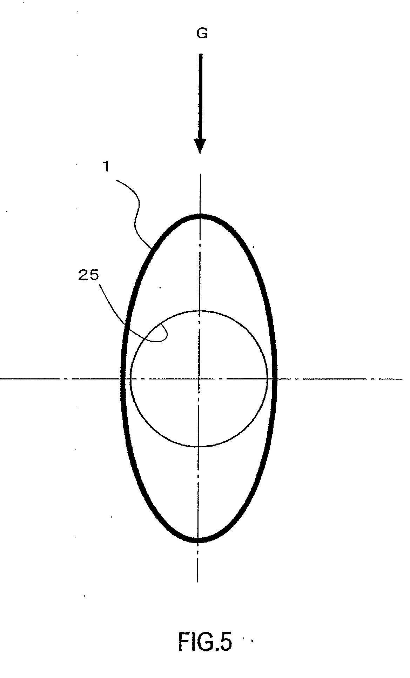

Fig. 5 is a schematic diagram (i.e., a side view of the fitting groove 21 shown in Fig. 2), in which the gasket 1 fitted in the fitting groove 21 is seen from the side of the intake manifold 30, and shows the state, in which the gasket 1 is fitted in the fitting groove 21 in the outer periphery of a throttle bore 25 formed in the throttle body 20. In Fig. 5, arrow G indicates the assembling direction, in which the throttle body 20 and the intake manifold 30 are relatively,assembled.

As shown in Fig. 5, the gasket 1 is preferred to have an elliptical shape having a longer axial direction in the assembling direction G.

As a result, the gasket 1 can be reduced in its portion generally perpendicular to the assembling direction of the throttle body 20 and the intake manifold 30. At this portion, the gasket 1 may fall when the throttle body 20 and the intake manifold 30 are assembled. In other words, the fall of the gasket 1 can be prevented by reducing that portion.

Here, the gasket 1 may be formed into either such an elliptical shape as is formed to have the direction of the longer axis in the assembling direction G after the gasket itself was formed, or such an elliptical shape that the gasket is fitted in the fitting groove 21 formed into the elliptical shape with the assembling direction G being in the longer axial direction.

Here is described another example for assembling the throttle body 20, which has the fitting groove 21 formed for fitting the gasket 1, and the intake manifold 30.

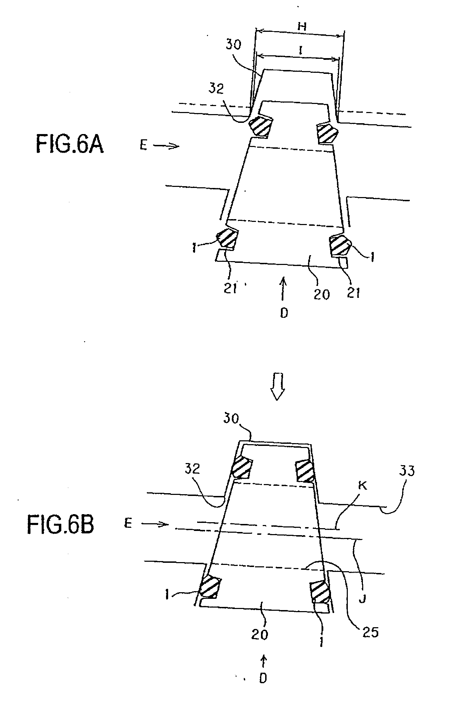

Fig. 6 presents diagrams for explaining another example of the assembly of the throttle body 20 and the intake manifold 30. Fig. 6A is a diagram showing the state before the assembly, and Fig. 6B is a diagram showing the state after the assembly. In the state after the assembly, as shown in Fig. 6, unlike Fig. 1, the center K of the throttle bore 25 of the throttle body 20 is displaced downstream of the assembling direction (i.e., the direction (of arrow D), in which the throttle body 20 moves relative to the intake manifold 30) with respect to the center J of the intake passage 33 of the intake manifold 30.

The interference between the gasket 1 and the corner portion 32 of the intake manifold 30 depends upon the relation between the width H of the corner portion 32 of the intake manifold 30, with which the gasket 1 may interfere at the assembling time, and the width of the portion, where the gasket 1 is disposed, of the throttle body 20. With the construction, as shown in Fig. 6, the width H can be made larger than that of the case of Fig. 1 (as shown by a dotted line in Fig. 6A) (as the width of the corner portion 32 of the case shown in Fig. 1 is indicated by I). Therefore, the assembly can be performed such that the corner portion 32 of the intake manifold 30 does not interfere with the gasket 1. As a result, the throttle body 20 and the intake manifold 30 can be assembled without any fall or torsion of the gasket 1.

Here in the state of the present embodiment, the fitting groove 21 is so formed into the tapering shape as to make efficient the workability at the gasket fitting time, and the portion of the gasket 1, which is disposed in the fitting groove, is also shaped to follow the fitting groove 21 substantially. However, the shape should not be limited thereto, but, for example as shown in Fig. 7 the fitting groove 21 may be formed to have a generally rectangular section, or the portion of the gasket 1 to be formed in the fitting groove may also be formed to have a generally rectangular section following the fitting groove substantially. Industrial Applicability

As has been described hereinbefore, the gasket assembling method and the gasket according to the present invention are useful for sealing the clearance between two members having confronting faces, and are suitable especially for sealing the clearance between the throttle body and the intake manifold.

### Description of Reference Numerals and Signs

- 1: Gasket
- 2: Bottom Face
- 3 and 4: Side Wall
- 5 and 6: Inclined Face
- 7: Corner Portion
- 8: Leading End
- 20: Throttle Body
- 21: Fitting Groove
- 22: Groove Bottom
- 23 and 24: Groove Side Wall
- 25: Throttle Bore
- 30: Intake Manifold
- 31: Close Contact Face
- 32: Corner Portion
- 33: Intake Passage

## Claims

1. A method for assembling a gasket,
which is fitted in a fitting groove formed in the face of one of two members having faces confronting each other, and is compressed when said two members are assembled as their faces approach each other obliquely with respect to their confronting direction, thereby to seal the clearance between said two members, and
which is formed into a generally pentagonal shape having two inclined faces forming a section of an angle shape protruding to the other of said two members and forming a leading end of a round section, and a bottom face for making planar contact with the groove bottom of said fitting groove, **characterized by** comprising:
the first step of fitting the gasket body in said fitting groove of said one member;
the second step of, prior to beginning the assembling of said two members, bringing said leading end of said two inclined faces of the gasket body fitted in said fitting groove into contact with only the close contact face of said other member that makes close contact after the assembly with said leading end; and
the third step of assembling said two members having the gasket body fitted therein, while said leading end being in sliding contact with said close contact face.

2. A method for assembling a gasket,
which is fitted in a fitting groove formed in the face of a throttle body of the throttle body and an intake manifold having faces confronting each other, and is compressed when the throttle body and the intake manifold are assembled as their faces approach each other obliquely with respect to their confronting direction, thereby to seal the clearance between the throttle body and the intake manifold, and
which is formed into a generally pentagonal shape having two inclined faces forming a section of an angle shape protruding to the side of the intake manifold and forming a leading end of a round section, and a bottom face for making planar contact with the groove bottom of said fitting groove, **characterized by** comprising:
the first step of fitting the gasket body in said fitting groove of said throttle body;
the second step of, prior to beginning the assembling of the throttle body and the intake manifold, bringing said leading end of said two inclined faces of the gasket body fitted in said fitting groove into contact with only the close contact face of the intake manifold that makes close contact after the assembly with said leading end; and
the third step of assembling the throttle body and the intake manifold having the gasket body fitted therein, while said leading end being in sliding contact with said close contact face.

3. A gasket assembling method as set forth in claim 2, **characterized in that**, at said third step, the corner portion of the generally pentagonal section, which is one of the end portions of said two inclined faces located on the downstream side in the direction of the relative movement of the intake manifold, and the side face between said corner portion and said bottom face make close contact with the confronting groove side wall of the fitting groove.

4. A gasket fitted in a fitting groove formed in the face of one of two members having confronting faces confronting each other, and compressed when said two members are assembled as their confronting faces approach each other obliquely with respect to their confronting direction, thereby to seal the clearance between said two members, **characterized:**
**in that** said gasket is formed into a generally pentagonal shape having two inclined faces forming a section of an angle shape protruding to the other of said two members and forming a leading end of a round section, and a bottom face for making planar contact with the groove bottom of said fitting groove; and
**in that**, in case said two members are assembled, the corner portion of the generally pentagonal section, which is one of the end portions of said two inclined faces located on the downstream side in the direction of the relative movement of said other member, and the side face between said corner portion and said bottom face make close contact with the confronting groove side wall of the fitting groove.

5. A gasket fitted in a fitting groove formed in the confronting face of a throttle body of the throttle body and an intake manifold having confronting faces confronting each other, and compressed when the throttle body and the intake manifold are assembled as their confronting faces approach each other obliquely with respect to their confronting direction, thereby to seal the clearance between the throttle body and the intake manifold, **characterized:**
**in that** said gasket is formed into a generally pentagonal shape having two inclined faces forming a section of an angle shape protruding to the side of the intake manifold and forming a leading end of a round section, and a bottom face for making planar contact with the groove bottom of said fitting groove; and
**in that**, in case the throttle body and the intake manifold are assembled, the corner portion of the generally pentagonal section, which is one of the end portions of said two inclined faces located on the downstream side in the direction of the relative movement of the intake manifold, and the side face between said corner portion and said bottom face make close contact with the confronting groove side wall of the fitting groove.

6. A gasket as set forth in claim 5, **characterized: in that**, in case the throttle body and the intake manifold are assembled, the gasket body is fitted in said fitting groove, and the assembly of the throttle body and the intake manifold begins with the contact between said leading end of said two inclined faces of the gasket body fitted in said fitting groove and said confronting face of the intake manifold, and then the throttle body and the intake manifold approach each other, while said leading end of said two inclined faces of the gasket body fitted in said fitting groove making sliding contact with only said confronting face of the intake manifold.

7. A gasket as set forth in claim 5 or 6, **characterized: in that** the shape, as taken from the side of the intake manifold, of the gasket body fitted in said fitting groove is an elliptical shape having a longer axial direction in the assembly direction, in which the throttle body and the intake manifold are assembled.
